# EUROPEAN PATENT SPECIFICATION

(11) **EP 2 814 691 B1**
(45) Date of publication and mention of the grant of the patent: **06.10.2021**
(21) Application number: 13707487.8
(22) Date of filing: 11.02.2013
(51) Int. Cl.: B60N 2/75

(54) **CLUTCHING DEVICE FOR A VEHICLE ARMREST ASSEMBLY**
KUPPLUNGSVORRICHTUNG FÜR EINE ARMLEHNENANORDNUNG EINES FAHRZEUGES
DISPOSITIF D'EMBRAYAGE POUR UN ENSEMBLE ACCOUDOIR DE VÉHICULE

(30) Priority: 16.02.2012 US 201261599658 P
(43) Date of publication of application: 24.12.2014
(73) Proprietor: KEIPER Seating Mechanisms Co., Ltd., Shanghai 201315 (CN)
(72) Inventor: SEIBOLD, Kurt A., Whitmore Lake, Michigan 48189 (US)
(74) Representative: Schwöbel, Thilo K.
(86) International application number: PCT/US2013/025573
(87) International publication number: WO 2013/122871

(56) References cited:
- US-A1- 2004 135 419
- US-B1- 6 752 462
- None

## Description

### CROSS REFERENCE TO RELATED APPLICATION

This application claims priority from and the benefit of U.S. Provisional Application Serial No. 61/599,658, entitled "CLUTCHING DEVICE FOR A VEHICLE ARMREST ASSEMBLY", filed February 16, 2012.

### BACKGROUND

The invention relates generally to vehicle seating, and more particularly, to a clutching device for an armrest assembly of the vehicle seating.

Vehicle seating typically includes a seat bottom and a seat back to support a driver or passenger. Based on the type of vehicle seating, the vehicle seating may also include an armrest. For example, bucket seats may include armrests, while bench row seating may not include armrests. In certain seating configurations, the seat bottom, the seat back, and the armrest include respective structural assemblies having a rigid structure, a cushion, and a fabric covering. Each structural assembly may also include various ancillary structures, such as a recliner mechanism, a headrest support, and/or a rotational assembly, for example. The structural assemblies are configured to support the weight of the passenger during normal vehicle operation, and to manage loads transferred to the seat during an impact.

When an armrest is included within the vehicle seating, the armrest is typically attached to the seat back. For example, the armrest may be attached to the seat back via an assembly that enables the armrest to rotate between a raised position and a lowered position. In some armrest configurations, the attachment assembly may include components that block upward rotation of the armrest beyond the raised position, and block downward rotation of the armrest beyond the lowered position. In addition, the attachment assembly may be configured to support a load placed on the armrest. Unfortunately, the attachment assembly may be difficult to manufacture due to the complexity of the design. For example, certain attachment assemblies may use a ratcheting system that is expensive to manufacture, and generates excessive noise in operation. Further, some attachment assemblies may have limited adjustability, thereby interfering with passenger ingress/egress, and/or reducing passenger comfort.

US 2004/135419 A1 discloses an armrest apparatus comprising a fixed shaft fixed to a seat frame, a rotation plate integrally connected to an armrest body and having a tubular portion into which the fixed shaft is inserted, a lock spring wound tightly on outer peripheral surfaces of a part of the fixed shaft and the tubular portion of the rotation plate in a free condition, a cancellation block rotatably mounted on a pivot shaft, and a cam unit mounted on a distal end of the fixed shaft and including a lock-canceling cam portion and a re-lock cam portion, the re-lock cam portion is spaced from the lock-canceling cam portion in a direction of rotation of the cam member.

US 6 752 462 B1 discloses a vehicle seat assembly including a seat having a side wall, an armrest mount coupled to the side wall of the seat, and an armrest coupled to the armrest mount for movement relative to the seat about a pivot axis between a raised position and a lowered position.

### BRIEF DESCRIPTION OF THE INVENTION

The present invention relates to an armrest assembly according to claim 1.

### DRAWINGS

FIG. 1 is a perspective view of an exemplary vehicle that includes seats which may employ an armrest assembly with a clutching device.
FIG. 2 is a perspective view of a seat shown in FIG. 1.
FIG. 3 is a perspective view of an embodiment of an armrest assembly that may be employed within the seat of FIG 2.
FIG. 4 is an exploded view of the armrest assembly of FIG. 3.
FIG. 5 is a partial front view of the armrest assembly of FIG. 3, with the armrest oriented in a raised position.
FIG. 6 is a partial front view of the armrest assembly of FIG. 3, with the armrest oriented in a lowered position.
FIG. 7 is a partial front view of the armrest assembly of FIG. 5, with a notched wheel removed.

### DETAILED DESCRIPTION

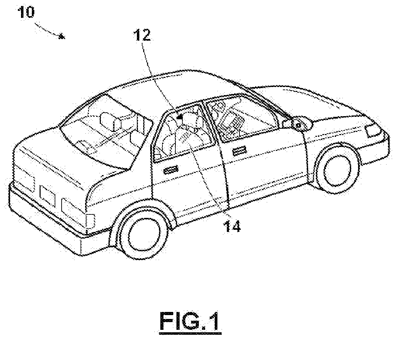

Turning now to the figures, FIG. 1 is a perspective view of an exemplary vehicle that includes seats which may employ an armrest assembly with a clutching device. As illustrated, the vehicle 10 includes an interior 12 having seats 14. As discussed in detail below, certain seats 14 include an armrest assembly with a clutching device. The clutching device enables the armrest to transition between an engaged state that resists a downward load, and a disengaged state that enables the armrest to freely rotate between a raised position and a lowered position, via rotation of the armrest. Such a configuration may provide increased adjustability, and substantially reduced seat construction costs, as compared to armrest assemblies formed without the clutching device.

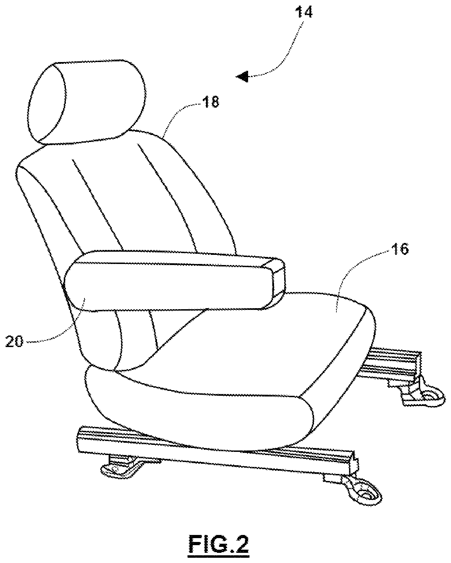

FIG. 2 is a perspective view of a seat 14 shown in FIG. 1. As illustrated, the seat 14 includes a seat bottom 16, a seat back 18, and an armrest assembly 20. In the present embodiment, the seat bottom 16, the seat back 18, and the armrest assembly 20 include a rigid structure, one or more cushions, and a fabric covering. The rigid structures serve to support the weight of a passenger during normal vehicle operation and during a vehicular impact (e.g., rapid acceleration or deceleration, etc.). For example, the armrest assembly 20 may be designed to support lateral loading, upward loading, and/or downward loading. Furthermore, the seat bottom structure secures the seat bottom 16 to a floor of the vehicle 10, and provides a mounting surface for the seat back 18. The seat back 18 provides a mounting surface for the armrest assembly 20. As discussed in detail below, the armrest assembly 20 includes a clutching assembly configured to provide a resettable armrest that selectively supports loads applied to the armrest assembly 20, and facilitates rotation of the armrest. Further, the clutching assembly is configured to reduce noise during armrest rotation, as compared to structures formed with ratcheting assemblies.

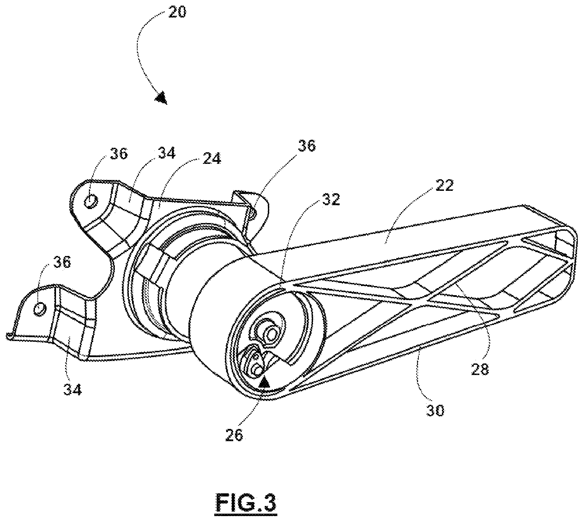

FIG. 3 is a perspective view of an embodiment of an armrest assembly 20 that may be employed within the seat 14 of FIG 2. As illustrated, the armrest assembly 20 includes an armrest 22 and a mounting bracket 24 for mounting the armrest 22 to a seat. A clutch assembly 26 is disposed between the armrest 22 and the mounting bracket 24 to enable the armrest 22 to rotate between the illustrated lowered position and a raised position. The armrest 22 includes a rigid structure having internal structural members 28 and an external structural member 30. Further, the armrest 22 includes an opening 32 where the clutch assembly 26 is disposed. As illustrated, the mounting bracket 24 includes various contours and bends 34 to facilitate attachment of the mounting bracket 24 to the seat back 18. The mounting bracket 24 also includes various openings 36 where fasteners may be inserted to secure the mounting bracket 24 to the seat back 18. As discussed in detail below, the clutch assembly 26 is engaged while the armrest 22 is in the lowered position, thereby enabling the armrest 22 to carry a downward load. Further, the clutch assembly 26 becomes disengaged via upward rotation of the armrest 22, thereby enabling the armrest 22 to be rotated toward the raised position. Accordingly, the clutch assembly 26 enables the armrest assembly 20 to be versatile and adjustable in a cost-effective manner.

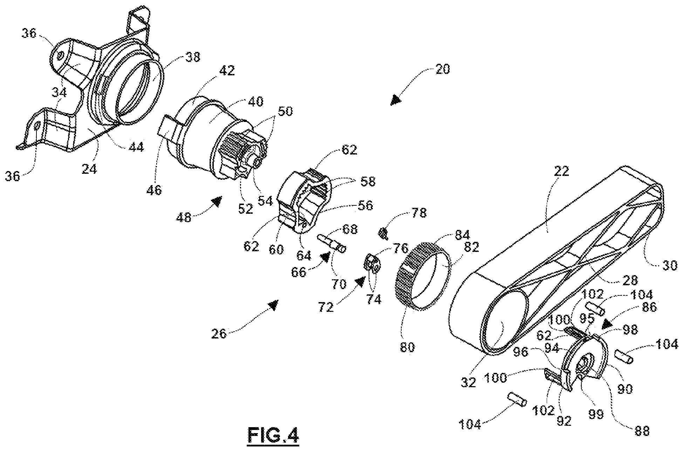

FIG. 4 is an exploded view of the armrest assembly 20 of FIG. 3. As illustrated, the armrest assembly 20 includes the mounting bracket 24. Further, the mounting bracket 24 includes an opening 38 configured to receive a fixed member 40. In particular, a coupling end 42 of the fixed member 40 may be inserted into the opening 38. The mounting bracket 24 also includes a slot 44 configured to receive a clip 46 (e.g., locking feature) of the fixed member 40 to rigidly attach the fixed member 40 to the mounting bracket 24. As illustrated, the fixed member 40 also includes a clutch mounting end 48 having toothed portions 50 and a notch 52. An axial extension 54, which is configured to establish a rotational axis of the clutch, extends out of the clutch mounting end 48 of the fixed member 40.

A coupling device 56 is configured to fit around the clutch mounting end 48. Specifically, the coupling device 56 includes complimentary toothed portions 58 that engage the toothed portions 50 of the fixed member 40. Further, the coupling device 56 includes a complimentary notch 60 that engages the notch 52 of the fixed member 40. The coupling device 56 also includes slotted portions 62 (e.g., guide slots) which are used to enable rotation of the armrest 22 and are used as part of a locking feature of the armrest 22, as explained in detail below. In addition, the coupling device 56 includes an opening 64 for insertion of a pin 66.

As illustrated, the pin 66 includes a first end 68 having a first diameter, and a second end 70 having a second diameter. During assembly, the first end 68 is inserted into the opening 64 until the edge of the second end 70 abuts the coupling device 56. As illustrated, the clutch assembly 26 includes a cam 72 (e.g., or another rotatable device or member) having openings 74 for inserting the pin 66 through the cam 72. The pin 66 forms the rotational axis for the cam 72. Further, the cam 72 also includes a pivot pin 76 for mounting a biasing member 78 (e.g., torsion spring, overcenter biasing device, etc.). The biasing member 78 exerts a force that directs the clutch assembly 26 toward the engaged position. With the clutch assembly 26 in the engaged position, the armrest 22 is inhibited from being lowered.

The clutch assembly 26 also includes a ring device 80 having an inner surface 82 and an outer surface 84. As illustrated, the inner surface 82 is smooth, and the outer surface 84 includes ridges extending around the circumference of the ring device 80 to provide rotational resistance. During assembly, the ring device 80 is disposed about the coupling device 56. Further, the armrest 22 is disposed about the ring device 80 such that the ring device 80 is within the opening 32. As will be appreciated, the ridges of the outer surface 84 facilitate securing the ring device 80 to the armrest 22.

The clutch assembly 26 includes a notched wheel 86 having an opening 88. During assembly, the axial extension 54 is inserted into the opening 88. The notched wheel 86 includes a first rim 90 extending in an axial direction away from the main body of the notched wheel 86. The first rim 90 extends around a portion of the notched wheel 86. The notched wheel 86 also includes a second rim 92 extending in an axial direction away from the main body of the notched wheel 86. The second rim 92 also extends around a portion of the notched wheel 86. Another portion 94 of the circumference of the notched wheel 86 does not include a rim. As illustrated, teeth 95 may be disposed along the portion 94. The rim 90 forms a first stop 96 on one end of the portion 94, and the rim 92 forms a second stop 98 on the opposite end of the portion 94. The stops 96 and 98 block rotation of the notched wheel 86, thereby limiting rotation of the armrest 22, as will be discussed in detail below. In certain embodiments, the teeth 95 may also function as stops to hold the armrest 22 in an intermediate position.

The notched wheel 86 includes a notch 99 configured to exert a force on the biasing member 78. The notched wheel 86 also includes extensions 100 (e.g., fingers) that are arranged to fit within the slotted portions 62 when the notched wheel 86 is attached to the clutch assembly 26. Each extension 100 includes an opening 102. Pins 104 are inserted into the openings 102 to facilitate locking of the clutch assembly 26 when the clutch assembly 26 is in the engaged position. In certain reference embodiments, discs, balls, or another device may be used in place of the pins 104. As discussed in detail below, the clutch assembly 26 facilitates armrest rotation without employing a ratcheting mechanism. As such, using the clutch assembly 26 within the armrest assembly 20 reduces the noise associated with changing a position of the armrest 22, as compared to armrest assemblies that employ a ratcheting mechanism.

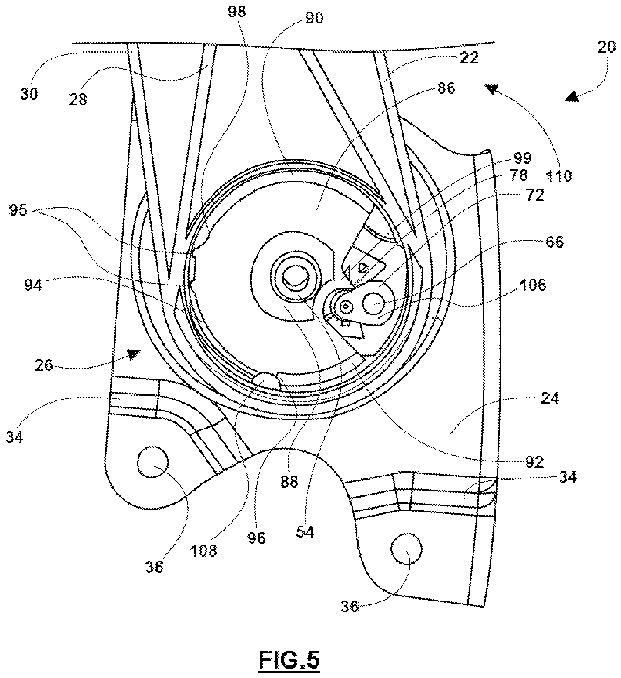

FIG. 5 is a partial front view of the armrest assembly 20 of FIG. 3, with the armrest 22 oriented in the raised position. As illustrated, the cam 72 is oriented in a disengaged position 106. Thus, the armrest 20 may rotate from the illustrated raised position (e.g., upper limit) toward the lowered position with limited resistance from the clutch assembly 26. The armrest 20 is configured to rotate from the raised position (i.e., upper limit in which a rounded extension 108 protruding from the armrest 24 bears against the first stop 96) to the lowered position in which the rounded extension 108 bears against the second stop 98. Further, the armrest 20 is configured to rotate from the lowered position to the illustrated raised position in a counterclockwise direction 110. As will be appreciated, as the armrest 24 rotates about the axial extension 54, the rounded extension 108 moves circumferentially along the edge of the notched wheel 86 (e.g., along the portion 94 of the notched wheel 86). When the armrest is rotated in the counter-clockwise direction 110 and the rounded extension 108 abuts the first stop 96, the notched wheel 86 is further rotated in the counter-clockwise direction 110 to drive the notch 99 against the cam 72 and to change the force vector of the biasing member 78 thereby disengaging the pins 104 (e.g., out of the locked or wedged position) from the slots 62, and disengaging the clutch assembly 26 (to place the armrest 20 in the raised position, as illustrated). As such, the clutch assembly 26 enables the armrest 20 to be adjustably rotated between the raised position and the lowered position.

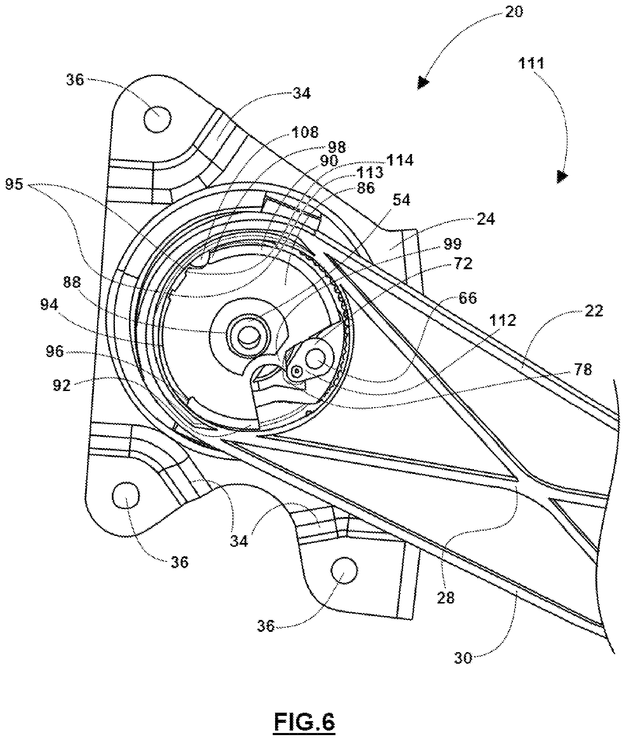

FIG. 6 is a partial front view of the armrest assembly 20 of FIG. 3, with the armrest oriented in the lowered position. As illustrated, the armrest 22 is fully rotated in a clockwise direction 111 relative to the raised position shown in FIG. 5. Further, the cam 72 is oriented in an engaged position 112. To transition the cam 72 to the engaged position 112, the armrest 22 is rotated from the raised position (e.g., upper limit), as shown in FIG. 5, to the illustrated lowered position (e.g., lower limit). Specifically, the armrest 22 is rotated in the clockwise direction 111 from the raised position in which the rounded extension 108 abuts the first stop 96 (as illustrated in FIG. 5). As the armrest 22 rotates, the rounded extension 108 traverses the portion 94, past a first tooth 113 and a second tooth 114, until the rounded extension 108 abuts the second stop 98. Thereafter, contact between the notch 99 and the cam 72 causes the biasing member 78 to rotate and reverse the force applied to the notched wheel 86 (e.g., in the engaged position 112). Accordingly, pins 104 within extension 100 are engaged (e.g., wedged or locked) within the slots 62. Thus, the clutch assembly 26 (e.g., unidirectional clutch) is engaged and resists downward force (e.g., clockwise direction 111). It should be noted that the operation of the clutch assembly 26 is accomplished with minimal noise, thus decreasing the noise of the armrest assembly 20 as compared to ratcheting armrest assemblies.

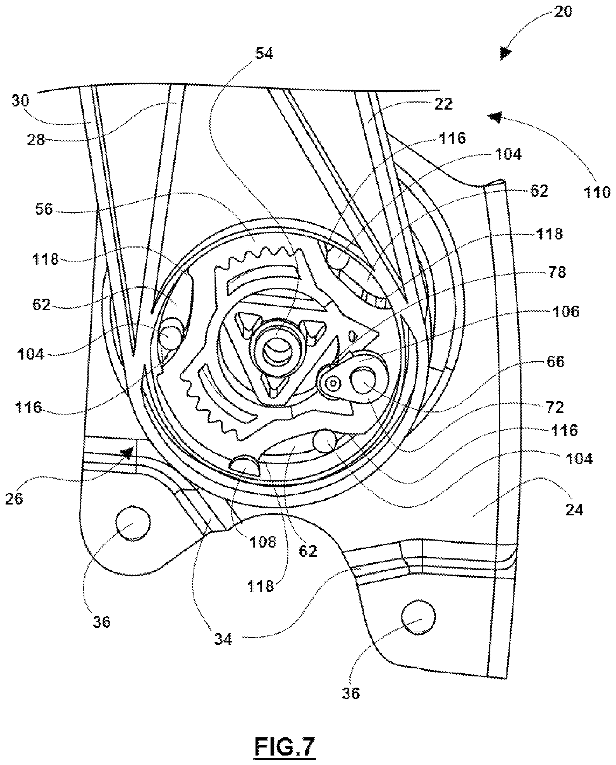

FIG. 7 is a partial front view of the armrest assembly 20 of FIG. 5, with the notched wheel 86 removed. The pins 104 that fit within the openings 102 of the extensions 100 of the notched wheel 86 are illustrated within the slots 62 in a position that corresponds to FIG. 5. As will be appreciated, when the armrest 22 is rotated in the clockwise direction 111, the pins 104 move within the slots 62 from a non-locking end 116 of the slots 62 to a locking end 118 of the slots 62. Further, when the armrest 22 is rotated in the counter-clockwise direction 110, the pins 104 move within the slots 62 from the locking end 118 of the slots 62 to the non- locking end 116 of the slots 62. Accordingly, when the armrest 22 is rotated in the counter-clockwise direction 110, the pins 104 are loaded against a surface of the non- locking end 116 via the notched wheel 86 and the armrest 22 is free to rotate. If the armrest 22 is rotated in the clockwise direction 111, the angle of the surface of the non- locking end 116 is large enough to limit normal forces between the pins 104 and the ring device 80 and allow rotation. Further rotation of the armrest 22 in the clockwise direction 111 to the position illustrated in FIG. 6 drives the pins 104 into the locking ends 118 of the slots 62 to engage with the surface of the locking ends 118. The angle of the surface of the locking ends 118 is small enough to increase the normal force between the pins 104 and the ring device 80. As will be appreciated, the increased normal force times the coefficient of friction may exceed the tangential forces applied to the armrest 22 and thereby resist rotation of the armrest 22.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. An armrest assembly (20) for a vehicle seat (14) comprising:
an armrest (22) configured to rotate between a raised position and a lowered position, wherein the armrest (22) comprises a rounded extension (108); and
a clutch assembly (26) coupled to the armrest (22), wherein the clutch assembly (26) comprises:
a coupling device (56) comprising a plurality of slotted portions (62), wherein each slotted portion (62) comprises a non-locking end (116) and a locking end (118);
a plurality pins (104), wherein each pin (104) is disposed within a respective slotted portion (62) of the coupling device (56);
a camming member (72) coupled to the coupling device (56), wherein the camming member (72) comprises openings (74) for insertion of a camming pin (66), and wherein the camming pin (66) is configured to form a rotational axis for the camming member (72);
a biasing member (78) coupled to the camming member (72); and
a notched wheel (86) comprising a first rim (90) extending in an axial direction away from a main body of the notched wheel (86) and partially extending around the notched wheel (86) and a second rim (92) extending in the axial direction away from the main body of the notched wheel (86) and partially extending around the notched wheel (86), wherein the first rim (90) forms a first stop (96) on a first end of a portion (94) of the notched wheel (86) and the second rim (92) forms a second stop (98) on a second end of the portion (94) of the notched wheel (86), wherein the first stop (96) is configured to contact the rounded extension (108) of the armrest (22) when the armrest (22) is being moved to the raised position and the second stop (98) is configured to contact the rounded extension (108) of the armrest (22) when the armrest (22) is being moved to the lowered position, wherein the notched wheel (86) further comprises extensions (100) that are arranged to fit within the slotted portions (62) of the coupling device (56), wherein each extension (100) comprises an opening (102) for receiving a pin (104);
wherein the notched wheel (86) comprises a notch (99) configured to apply a force on the biasing member (78) as the armrest (22) is moved between the raised position and the lowered position to drive the camming member (72) into an engaged position (112) such that each pin (104) is engaged within the locking end (118) of the respective slotted portion (62) to inhibit the armrest (22) from being lowered; and
wherein rotation of the armrest (22) toward the raised position causes the rounded extension (108) to abut the first stop (96) of the notched wheel (86) and redirects force applied by the biasing member (78) to drive the camming member (72) into a disengaged position (106) such that each pin (104) is disengaged from the locking end (118) of the respective slotted portion (62).

2. The armrest assembly (20) of claim 1, wherein the clutch assembly (26) comprises a plurality of stops (96, 98), and wherein rotation of the armrest (22) toward the lowered position drives the rounded extension (108) of the armrest (22) toward at least one of the plurality of stops (96, 98).

3. The armrest assembly (20) of claim 2, wherein, when the rounded extension (108) of the armrest (22) is driven toward at least one of the plurality of stops (96, 98), the biasing member (78) drives the camming member (72) into the engaged position (112).

4. The armrest assembly (20) of claim 1, wherein the rounded extension (108) is configured to engage the clutch assembly (26) as the armrest (22) moves between the raised position and the lowered position.

5. The armrest assembly (20) of claim 1, wherein the camming member (72) is a unidirectional camming member (72), and wherein while the unidirectional camming member (72) is in the engaged position (112) rotation of the armrest (22) toward the lowered position is blocked and rotation of the armrest (22) toward the raised position is enabled, and while the unidirectional camming member (72) is in the disengaged position (106) rotation of the armrest (22) toward the lowered position and toward the raised position are enabled.

## Patentansprüche

1. Armlehnenanordnung (20) für einen Fahrzeugsitz (14), umfassend:
eine Armlehne (22), die dazu ausgestaltet ist, sich zwischen einer angehobenen Position und einer abgesenkten Position zu drehen, wobei die Armlehne (22) eine abgerundete Verlängerung (108) umfasst, und
eine Kupplungsanordnung (26), die an die Armlehne (22) gekoppelt ist, wobei die Kupplungsanordnung (26) Folgendes umfasst:
eine Kopplungsvorrichtung (56), die eine Vielzahl von geschlitzten Abschnitten (62) umfasst, wobei jeder geschlitzte Abschnitt (62) ein Nicht-Verriegelungsende (116) und ein Verriegelungsende (118) umfasst,
eine Vielzahl von Stiften (104), wobei jeder Stift (104) in einem jeweiligen geschlitzten Abschnitt (62) der Kopplungsvorrichtung (56) angeordnet ist,
ein an die Kopplungsvorrichtung (56) gekoppeltes Kurvenglied (72), wobei das Kurvenglied (72) Öffnungen (74) zum Einführen eines Kurvenstifts (66) umfasst und wobei der Kurvenstift (66) zum Bilden einer Rotationsachse für das Kurvenglied (72) ausgestaltet ist,
ein an das Kurvenglied (72) gekoppeltes Vorspannglied (78) und
ein Kerbrad (86), das einen ersten Rand (90), der sich in einer axialen Richtung von einem Hauptkörper des Kerbrads (86) weg erstreckt und sich teilweise um das Kerbrad (86) herum erstreckt, und einen zweiten Rand (92) umfasst, der sich in einer axialen Richtung von dem Hauptkörper des Kerbrads (86) weg erstreckt und sich teilweise um das Kerbrad (86) herum erstreckt, wobei der erste Rand (90) einen ersten Anschlag (96) an einem ersten Ende eines Abschnitts (94) des Kerbrads (86) bildet und der zweite Rand (92) einen zweiten Anschlag (98) an einem zweiten Ende des Abschnitts (94) des Kerbrads (86) bildet, wobei der erste Anschlag (96) dazu ausgestaltet ist, die abgerundete Verlängerung (108) der Armlehne (22) zu kontaktieren, wenn die Armlehne (22) in die angehobene Position bewegt wird, und der zweite Anschlag (98) dazu ausgestaltet ist, die abgerundete Verlängerung (108) der Armlehne (22) zu kontaktieren, wenn die Armlehne (22) in die abgesenkte Position bewegt wird, wobei das Kerbrad (86) ferner Verlängerungen (100) umfasst, die dazu angeordnet sind, in die geschlitzten Abschnitte (62) der Kopplungsvorrichtung (56) zu passen, wobei jede Verlängerung (100) eine Öffnung (102) zur Aufnahme eines Stifts (104) umfasst,
wobei das Kerbrad (86) eine Kerbe (99) umfasst, die dazu ausgestaltet ist, eine Kraft auf das Vorspannglied (78) auszuüben, wenn die Armlehne (22) zwischen der angehobenen Position und der abgesenkten Position bewegt wird, um das Kurvenglied (72) in eine eingerückte Position (112) zu treiben, so dass jeder Stift (104) in dem Verriegelungsende (118) des jeweiligen geschlitzten Abschnitts (62) eingerückt ist, um das Absenken der Armlehne (22) zu hemmen, und
wobei durch die Drehung der Armlehne (22) zu der angehobenen Position hin veranlasst wird, dass die abgerundete Verlängerung (108) an den ersten Anschlag (96) der Kerbrads (86) anschlägt und von dem Vorspannglied (78) ausgeübte Kraft umleitet, um das Kurvenglied (72) in eine ausgerückte Position (106) zu treiben, so dass jeder Stift (104) aus dem Verriegelungsende (118) des jeweiligen geschlitzten Abschnitts (62) ausgerückt wird.

2. Armlehnenanordnung (20) nach Anspruch 1, wobei die Kupplungsanordnung (26) eine Vielzahl von Anschlägen (96, 98) umfasst und wobei durch Drehung der Armlehne (22) zu der abgesenkten Position hin die abgerundete Verlängerung (108) der Armlehne (22) zu mindestens einem der Vielzahl von Anschlägen (96, 98) hin getrieben wird.

3. Armlehnenanordnung (20) nach Anspruch 2, wobei, wenn die abgerundete Verlängerung (108) der Armlehne (22) zu mindestens einem der Vielzahl von Anschlägen (96, 98) hin getrieben wird, das Vorspannglied (78) das Kurvenglied (72) in die eingerückte Position (112) treibt.

4. Armlehnenanordnung (20) nach Anspruch 1, wobei die abgerundete Verlängerung (108) dazu ausgestaltet ist, die Kupplungsanordnung (26) in Eingriff zu nehmen, wenn sich die Armlehne (22) zwischen der angehobenen Position und der abgesenkten Position bewegt.

5. Armlehnenanordnung (20) nach Anspruch 1, wobei das Kurvenglied (72) ein in einer Richtung verlaufendes Kurvenglied (72) ist und wobei die Drehung der Armlehne (22) zu der abgesenkten Position hin blockiert ist und die Drehung der Armlehne (22) zu der angehobenen Position hin möglich ist, während das in einer Richtung verlaufende Kurvenglied (72) in der eingerückten Position (112) ist, und die Drehung der Armlehne (22) zu der abgesenkten Position hin und zu der angehobenen Position hin möglich ist, während das in einer Richtung verlaufende Kurvenglied (72) in der ausgerückten Position (106) ist.

## Revendications

1. Ensemble accoudoir (20) pour siège de véhicule (14) comprenant :
un accoudoir (22) conçu pour pivoter entre une position élevée et une position abaissée, l'accoudoir (22) comprenant une extension arrondie (108) ; et
un ensemble embrayage (26) accouplé à l'accoudoir (22), l'ensemble embrayage (26) comprenant :
un dispositif d'accouplement (56) comprenant une pluralité de parties fendues (62), chaque partie fendue (62) comprenant une extrémité de non verrouillage (116) et une extrémité de verrouillage (118) ;
une pluralité de broches (104), chaque broche (104) étant disposée à l'intérieur d'une partie fendue (62) respective du dispositif d'accouplement (56) ;
un élément de came (72) accouplé au dispositif d'accouplement (56), l'élément de came (72) comprenant des ouvertures (74) pour l'insertion d'une broche de came (66), et la broche de came (66) étant conçue pour former un axe de rotation pour l'élément de came (72) ;
un élément de sollicitation (78) accouplé à l'élément de came (72) ; et
une roue crantée (86) comprenant une première jante (90) s'étendant dans une direction axiale à l'opposé d'un corps principal de la roue crantée (86) et s'étendant partiellement autour de la roue crantée (86) et une seconde jante (92) s'étendant dans la direction axiale à l'opposé du corps principal de la roue crantée (86) et s'étendant partiellement autour de la roue crantée (86), la première jante (90) formant une première butée (96) sur une première extrémité d'une partie (94) de la roue crantée (86) et la seconde jante (92) formant une seconde butée (98) sur une seconde extrémité de la partie (94) de la roue crantée (86), la première butée (96) étant conçue pour entrer en contact avec l'extension arrondie (108) de l'accoudoir (22) lorsque l'accoudoir (22) est déplacé vers la position élevée et la seconde butée (98) étant conçue pour entrer en contact avec l'extension arrondie (108) de l'accoudoir (22) lorsque l'accoudoir (22) est déplacé vers la position abaissée, la roue crantée (86) comprenant en outre des extensions (100) qui sont conçues pour s'insérer dans les parties fendues (62) du dispositif d'accouplement (56), chaque extension (100) comprenant une ouverture (102) pour recevoir une broche (104) ;
la roue crantée (86) comprenant une encoche (99) conçue pour appliquer une force sur l'élément de sollicitation (78) lorsque l'accoudoir (22) est déplacé entre la position élevée et la position abaissée pour entraîner l'élément de came (72) dans une position en prise (112) de sorte que chaque broche (104) soit en prise dans l'extrémité de verrouillage (118) de la partie fendue (62) respective pour empêcher l'accoudoir (22) d'être abaissé ; et
la rotation de l'accoudoir (22) vers la position élevée amenant l'extension arrondie (108) à buter contre la première butée (96) de la roue crantée (86) et redirigeant la force appliquée par l'élément de sollicitation (78) pour entraîner l'élément de came (72) dans une position désaccouplée (106) de sorte que chaque broche (104) soit séparée de l'extrémité de verrouillage (118) de la partie fendue (62) respective.

2. Ensemble accoudoir (20) selon la revendication 1, l'ensemble embrayage (26) comprenant une pluralité de butées (96, 98), et la rotation de l'accoudoir (22) vers la position abaissée entraînant l'extension arrondie (108) de l'accoudoir (22) vers au moins une de la pluralité de butées (96, 98).

3. Ensemble accoudoir (20) selon la revendication 2, lorsque l'extension arrondie (108) de l'accoudoir (22) est entraînée vers au moins une de la pluralité de butées (96, 98), l'élément de sollicitation (78) entraînant l'élément de came (72) dans la position en prise (112).

4. Ensemble accoudoir (20) selon la revendication 1, l'extension arrondie (108) étant conçue pour venir en prise avec l'ensemble embrayage (26) lorsque l'accoudoir (22) se déplace entre la position élevée et la position abaissée.

5. Ensemble accoudoir (20) selon la revendication 1, l'élément de came (72) étant un élément de came unidirectionnel (72), et lorsque l'élément de came unidirectionnel (72) est dans la position en prise (112), la rotation de l'accoudoir (22) vers la position abaissée étant bloquée et la rotation de l'accoudoir (22) vers la position élevée étant autorisée, et lorsque l'élément de came unidirectionnel (72) est dans la position désaccouplée (106), la rotation de l'accoudoir (22) vers la position abaissée et vers la position élevée étant autorisée.
